# FASCICULE DE BREVET EUROPEEN

(11) **EP 3 281 157 B1**
(45) Date de publication et mention de la délivrance du brevet: **17.03.2021**
(21) Numéro de dépôt: 16721869.2
(22) Date de dépôt: 05.04.2016
(51) Int. Cl.: G06Q 10/00

(54) **SYSTÈME DE MUTUALISATION DE DONNÉES RELATIVES À DES MOTEURS D'AÉRONEFS**
SYSTEM ZUR BÜNDELUNG VON LUFTFAHRZEUGMOTORENDATEN
SYSTEM FOR MUTUALIZING AIRCRAFT ENGINE DATA

(30) Priorité: 09.04.2015 FR 1553066
(43) Date de publication de la demande: 14.02.2018
(73) Titulaire: SAFRAN AIRCRAFT ENGINES, 75015 Paris (FR)
(72) Inventeur: LACAILLE, Jérôme Henri Noël, 77550 Moissy-cramayel Cedex (FR)
(74) Mandataire: Brevalex
(86) Numéro de dépôt international: PCT/FR2016/050766
(87) Numéro de publication internationale: WO 2016/162622

(56) Documents cités:
- WO-A1-2008/141046
- FR-A1- 2 971 595
- FR-A1- 3 006 785
- JEROME LACAILLE ET AL: "Visual mining and statistics for a turbofan engine fleet", AEROSPACE CONFERENCE, 2011 IEEE, IEEE, 5 mars 2011 (2011-03-05), pages 1-8, XP031938160, DOI: 10.1109/AERO.2011.5747578 ISBN: 978-1-4244-7350-2

## Description

### DOMAINE DE L'INVENTION

La présente invention se rapporte au domaine de la gestion des moteurs d'aéronefs. En particulier, l'invention concerne un système de mutualisation de données d'observation relatives à des moteurs d'aéronefs pourvoyant une aide à la gestion des flottes de moteurs d'aéronefs.

A chaque moteur d'aéronef correspond un historique comportant des mesures de paramètres de fonctionnement, des alertes, des interventions effectuées sur le moteur, etc.

Plus particulièrement, durant chaque vol, un aéronef procède à l'enregistrement et l'envoi d'informations sur son fonctionnement selon un système de message nommé ACARS (Aircraft Communication Addressing and Reporting System). Ces données sont récupérées par les stations au sol en temps réel pour être traitées immédiatement dans le cas d'anomalies évidentes et sinon pour être archivées par la compagnie aérienne avec toutes les données de la flotte. D'autres données plus complètes (par exemple, les vitesses de rotation des arbres, le débit carburant, la température des gaz d'échappement, etc.) sont aussi disponibles, elles peuvent être enregistrées durant le vol sur des calculateurs embarqués et être déchargées régulièrement pour enrichir les informations relatives aux moteurs.

Les différentes données issues des messages reçus directement des différents aéronefs ou celles récupérées au sol depuis les mémoires internes des calculateurs embarqués sont archivées par la compagnie aérienne.

Ces données sont ensuite consultées par des experts pour analyser et surveiller le bon fonctionnement du moteur.

Toutefois, les mesures réalisées sur le moteur sont définies dans un espace multidimensionnel et ne sont par conséquent, pas simples à exploiter.

De plus, les anomalies ou incidents sur les moteurs sont heureusement assez rares et lorsqu'un symptôme particulier ou un comportement inhabituel est détecté sur un moteur donné, la compagnie n'a pas forcement assez d'historiques sur la vie des moteurs pour chercher des moteurs qui ont eu un comportement analogue dans le passé. Ainsi, il n'est pas toujours possible pour la compagnie de bien cerner les dégradations et les pannes potentielles du moteur et elle peut donc difficilement faire des pronostics.

L'objet de la présente invention est par conséquent d'exploiter de manière optimale les données d'observation relatives à des moteurs d'aéronefs afin de mieux gérer des flottes de moteurs d'aéronefs et en particulier, afin de pronostiquer et de planifier les interventions ou opérations de maintenance avec une grande précision sans présenter les inconvénients précités.

### OBJET ET RÉSUME DE L'INVENTION

La présente invention concerne un système de mutualisation de données d'observation relatives à des moteurs d'aéronefs, comportant :
- un récepteur adapté pour récupérer lesdites données d'observation depuis des entités distinctes, chaque entité fournissant par l'intermédiaire d'un lien de communication sécurisé les données d'observation relatives à sa propre flotte de moteurs d'aéronef, lesdites données d'observation comportant des données de configuration de moteurs d'aéronefs, des données descriptives décrivant des interventions ou opérations de maintenance sur des moteurs d'aéronef et des données numériques de détection issues de capteurs et calculateurs embarqués dans les moteurs d'aéronefs, lesdites données numériques de détection (151a) comprenant des mesures sur des variables endogènes décrivant le comportement des moteurs et des mesures sur des variables exogènes décrivant le contexte d'acquisition,
- un processeur adapté pour décrire lesdites données d'observation dans un espace métrique, les données de détection étant transformées en des états de détection en les standardisant et en les comprimant, les données de configuration et les données descriptives étant comprimés selon un codage catégoriel relatif aux types de moteurs, de composants, d'opérations effectuées et symptômes formant ainsi des états de configuration et des états descriptifs, transformant ainsi lesdites données d'observation en des états d'observation mesurables, les mesures relatives aux variables endogènes étant standardisées en prenant en compte les mesures relatives aux variables exogènes pour former à chaque acquisition des données de détection standardisées du moteur indépendantes du contexte d'acquisition, la compression de données numériques de détection étant réalisée par un outil de compression (31) adapté pour réduire le nombre de dimensions d'un espace d'observation dans lequel les données d'observation sont décrites le transformant en ledit espace métrique définissant des mesures exploitables, et

- une base de données adaptée pour y stocker lesdits états d'observation mesurables comprenant des états de détection standardisés ainsi que des états de configuration et des états descriptifs, constituant ainsi un modèle d'apprentissage,
- le récepteur étant adapté pour recevoir une requête depuis une entité requérante, ladite requête comportant des données de requête relatives à des observations liées à au moins un moteur d'aéronef présentant un intérêt pour l'entité requérante,
- le processeur étant adapté :
   pour décrire ladite requête dans ledit espace métrique en transformant lesdites données de requête en des états de requête mesurables, et
   pour chercher une réponse à ladite requête en comparant selon une métrique correspondant à la requête lesdits états de requête à des états d'observation stockés dans la base de données, la comparaison comportant le calcul d'une distance entre au moins un état de requête et des états d'observation stockés dans la base de données, la réponse à la requête comportant des éléments dans la base de données qui présentent par rapport aux éléments de la requête une distance inférieure à un seuil prédéterminé, et
- un transmetteur adapté pour transmettre ladite réponse par l'intermédiaire d'un lien de communication sécurisé à l'entité requérante. Ainsi, en récupérant une grande quantité de données d'observation, le système engendre des modèles d'apprentissage très précis, beaucoup plus précis que si chaque entité œuvrait toute seule pour pronostiquer l'évolution des moteurs. En effet, étant donné que les moteurs d'aéronefs sont très sécurisés et les anomalies sont heureusement rares, une entité donnée ne dispose pas de données suffisantes pour pouvoir faire des pronostics précis et très fiables sur les opérations de maintenance à réaliser sur un moteur d'aéronef lorsqu'une anomalie est détectée. Le système de mutualisation de la présente invention permet de collecter, mutualiser et exploiter des mesures sur beaucoup de paramètres physiques et sur un grand nombre de moteurs depuis des entités distinctes.

On notera que la « mutualisation » selon l'invention ne consiste pas uniquement à mettre en commun toutes ces données car ces dernières ne sont pas exploitables. En effet, ces données sont très hétérogènes, sont issues de sources très différentes et sont très nombreuse, définissant ainsi un espace multidimensionnel où il n'est a priori pas possible de comparer les différentes données entre elles. Le système de mutualisation transforme toutes les données d'observation en des états d'observation mesurables permettant de les comparer et de les exploiter. Ainsi, lorsqu'un comportement inhabituel est détecté sur un moteur, le système de mutualisation permet de prévoir l'évolution et les opérations de maintenance à réaliser sur ce moteur ou les améliorations à apporter sur des moteurs en construction ou en développement en exploitant la connaissance de l'évolution des moteurs qui ont eu un symptôme analogue dans le passé.

On notera que les données de configuration comportent les types de moteurs et composants. Les données descriptives comportent des opérations de maintenance effectuées, des symptômes, et des niveaux de dégradation et usures observés lors des démontages des moteurs. Les données numériques de détection comportent des mesures sur des variables endogènes décrivant le comportement du moteur et le contexte d'acquisition des mesures. Ainsi, les données d'observation fournissent des données très détaillées et précieuses permettant de fournir après traitement des statistiques anticipatives ou générales précises sur les moteurs d'aéronefs.

On notera que le système comporte :
- un récepteur adapté pour recevoir une requête depuis une entité requérante, ladite requête comportant des données de requête relatives à des observations liées à au moins un moteur d'aéronef,
- un processeur adapté pour décrire ladite requête dans l'espace métrique en transformant lesdites données de requête en des états de requête mesurables,
- un processeur adapté pour chercher une réponse à ladite requête en comparant selon une métrique correspondant à la requête lesdits états de requête à des états d'observation stockés dans la base de données, et
- un transmetteur adapté pour transmettre ladite réponse à l'entité requérante.

Ainsi, chaque entité apporte ses informations et en retour elle bénéficie des informations de l'ensemble des entités et profite donc de manière indirecte des observations des autres entités. Ce système assure à l'entité requérante un service d'appui précis et performant pour gérer sa flotte de moteurs d'aéronefs.

Avantageusement, l'entité correspond à une compagnie aérienne, chaque compagnie fournissant des données d'observation relatives à sa propre flotte de moteurs d'aéronef.

Avantageusement, l'entité peut également correspondre à une unité de construction, de maintenance, ou de service d'un motoriste d'aéronef.

Avantageusement, la requête est définie selon un modèle sélectionné parmi un ensemble de modèles de requêtes prédéterminés à l'avance.

Avantageusement, le processeur est adapté pour utiliser un outil de compression pour réduire le nombre de dimensions d'un espace d'observation au sein duquel les données d'observation sont décrites, transformant ainsi l'espace d'observation en ledit espace métrique au sein duquel les états sont mesurables et par conséquent, facilement exploitables.

L'outil de compression peut être basé sur au moins une des techniques suivantes : analyse parcimonieuse, analyse cartographique, analyse de classification non supervisée, analyse en composante principale, et analyse de calcul itératif.

Avantageusement, la comparaison comporte le calcul d'une distance entre au moins un état de requête et des états d'observation stockés dans la base de données, ladite distance étant sélectionnée parmi les distances suivantes : distance usuelle, distance binaire, et distance d'édition mesurant la similarité entre différentes successions d'états.

La distance permet de définir une notion de proximité pour rechercher les éléments dans la base de données qui présentent par rapport aux éléments de la requête un écart inférieur à un seuil prédéterminé.

Avantageusement, le processeur est adapté pour présenter la réponse à la requête sous une forme de diagrammes statistiques anticipatifs et/ou généraux.

La distribution relative à l'entité requérante peut ainsi être représentée par rapport à la distribution totale de toutes les entités. Les identités des entités, exceptée celle de la requérante, ne sont pas affichées.

Avantageusement, la réponse à la requête comporte une liste d'observations passées similaires aux observations définies dans la requête.

Ainsi, l'état futur d'un moteur donné visé par la requête peut être extrapolé grâce aux trajectoires des autres moteurs ayant eu des comportements similaires au moteur donné.

Avantageusement, chacun des récepteur et transmetteur est sécurisé. Ainsi, la communication des données entre chacune des entités et le système de mutualisation est sécurisée.

Avantageusement, le processeur est adapté pour faire une mise à jour de la base de données en y enregistrant les états des requêtes reçues ainsi que les résultats desdites requêtes.

Ainsi, on prend en compte les nouvelles données d'observation pour en affiner davantage les réponses aux futures requêtes.

### BRÈVE DESCRIPTION DES DESSINS

D'autres particularités et avantages du système selon l'invention ressortiront mieux à la lecture de la description faite ci-après, à titre indicatif mais non limitatif, en référence aux dessins annexés sur lesquels:
- la Fig. 1 illustre un système de mutualisation de données d'observation relatives à des moteurs d'aéronefs, selon un mode de réalisation de l'invention; et
- la Fig. 2 illustre de manière schématique un exemple d'un procédé de service d'appui mis en œuvre par le système de mutualisation selon l'invention.

### DESCRIPTION DÉTAILLÉE DE MODES DE RÉALISATION

Le principe de l'invention consiste à exploiter au mieux les données d'observation des moteurs afin de réaliser des modèles d'apprentissage permettant d'en déduire des statistiques générales ou anticipatives très précises sur les moteurs.

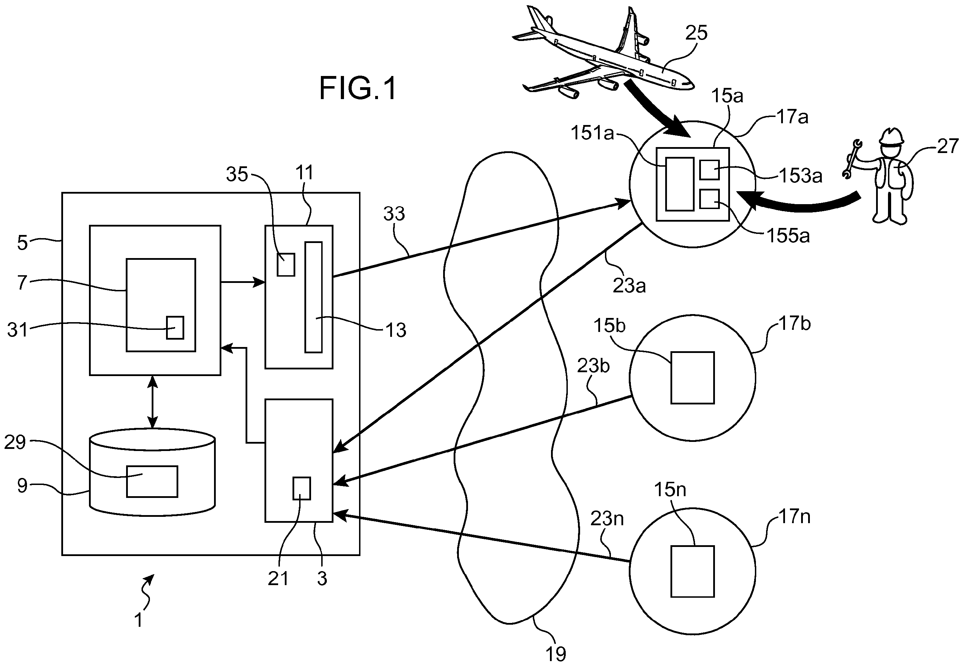

La Fig. 1 illustre un système de mutualisation de données d'observation relatives à des moteurs d'aéronefs, selon un mode de réalisation de l'invention.

Le système de mutualisation 1 est mis en œuvre par un système informatique comprenant de manière habituelle un récepteur 3, des moyens de traitement 5 comprenant un processeur 7, une base de données 9, et des moyens de sortie 11 comprenant un transmetteur 13.

Le récepteur 3 est adapté pour récupérer des données d'observation 15a, 15b, 15n depuis des entités 17a, 17b, 17n distinctes à travers un réseau 19 de communication. Avantageusement, le récepteur 3 comporte des outils de chargement 21 pour rapatrier toutes ces informations d'origines différentes depuis les différentes entités 17a, 17b, 17n.

Chaque entité 17a, 17b, 17n peut correspondre à une compagnie aérienne fournissant par l'intermédiaire d'un lien de communication sécurisé 23a, 23b, 23n des données d'observation 15a, 15b, 15n relatives à sa propre flotte de moteurs d'aéronef.

On notera qu'une entité 17a, 17b, 17n peut également correspondre à une unité de fabrication, de maintenance, ou de service d'un motoriste d'aéronef.

Les données d'observation 15a, 15b, 15n peuvent comprendre des données numériques de détection 151a, des données de configuration 153a de moteurs d'aéronefs, et des données descriptives 155a décrivant des interventions ou opérations de maintenance sur des moteurs d'aéronefs.

Les données numériques de détection 151a sont issues de capteurs et/ou calculateurs embarqués dans les moteurs d'aéronefs.

En effet, au cours d'un vol, un aéronef 25 procède à l'enregistrement de données numériques de détection 151a relatives à son fonctionnement ainsi qu'à des différents paramètres environnementaux. Ces données numériques de détection 151a sont issues des mesures fournies par des calculateurs et/ou capteurs intégrés dans l'aéronef 25 et sont enregistrées par les calculateurs embarqués (FADEC, ACMS, DAR, QAR, etc.). Par exemple, le FADEC (qui contrôle le moteur) enregistre un certain nombre de variables mesurées par des capteurs intégrés au moteur permettant à la fois de contrôler le moteur et de servir de base à une procédure de maintenance prédictive. Ces variables comportent des vitesses de rotation, des températures et pressions de fluides en différentes localisations du moteur, etc.

En général, un aéronef 25 envoie régulièrement au sol des petits messages instantanés comportant des indicateurs ou données numériques de détection issus des mesures de détection. Durant chaque vol, l'aéronef 25 envoie au moins deux messages au sol, l'un lors du décollage et l'autre pendant la phase de croisière. Ces messages sont envoyés grâce à un système de transmission de données numériques ACARS entre l'aéronef 25 en vol et le sol.

Les stations au sol appartenant à chaque entité 17a, 17b, 17n (compagnie aérienne et/ou motoriste) récupèrent les différents messages émis à différentes dates pour différents aéronefs et pour différents moteurs. De plus, chaque compagnie décharge régulièrement, les données numériques de détection 151a enregistrées durant le vol sur les calculateurs embarqués pour enrichir les informations relatives aux moteurs.

Ainsi, chaque compagnie possède des données numériques de détection 151a recueillies au cours du temps concernant sa flotte de moteurs. Les données numériques de détection 151a sont associées à des dates d'acquisition ainsi qu'à des identifiants des moteurs concernés et comprennent donc les données provenant des messages reçus directement depuis les différents aéronefs ainsi que les données récupérées au sol depuis les mémoires internes des calculateurs embarqués.

Par ailleurs, chaque compagnie possède également des données de configuration 153a ainsi que des données descriptives 155a d'opérations de maintenance sur ses moteurs d'aéronefs.

En particulier, chaque intervention effectuée sur un moteur ainsi que les comportements ou symptômes ayant conduit à cette intervention sont enregistrés par un opérateur de maintenance 27. Cet enregistrement est réalisé en utilisant un codage catégoriel relatif aux types de moteurs, de composants, d'opérations effectuées ainsi qu'aux symptômes. En particulier, les types de moteurs sont désignés par des catégories spécifiques auxquelles le numéro de version du logiciel FADEC est ajouté. Les composants sont naturellement désignés par des catégories et sont distingués en fonction du fournisseur et éventuellement de la date d'installation. Par ailleurs, les opérations de maintenance (par exemple, lavage à l'eau, restauration de performance, changement d'une aube, etc.) sont rangées en catégories d'opération par l'opérateur de maintenance 27.

Ainsi, le récepteur 3 est adapté pour récupérer de manière sécurisée des données d'observation 15a, 15b, 15n comprenant des données de détection 151a ainsi que des données de configuration 153a et d'informations 155a sur les opérations de maintenance.

Toutefois, ces données d'observation 15a, 15b, 15n récupérées depuis les différentes entités et en particulier, les données de détection 151a, ne sont pas facilement exploitables. Elles sont décrites dans un espace d'observation multidimensionnel dont la dimension est assez importante. Ainsi, afin de bien exploiter les données d'observation 15a, 15b, 15n, le processeur 7 est adapté pour les décrire dans un espace métrique en les transformant en des points ou états d'observation 29 mesurables.

Plus particulièrement, le processeur 7 est adapté pour réduire le nombre de dimensions de l'espace d'observation au sein duquel les données d'observation 15a, 15b, 15n sont décrites en utilisant un outil de compression 31. L'outil de compression 31 permet de transformer l'espace d'observation en un espace métrique définissant des mesures exploitables. Cet outil 31 sert essentiellement à comprimer les données numériques de détection 151a étant donné que les autres types de données (i.e., données de configuration 153a et données descriptives 155a) présentent un volume moindre et sont en plus, déjà comprimés selon un codage catégoriel préétabli à l'avance. Chaque donnée descriptive d'une opération de maintenance et de même chaque donnée de configuration peut déjà être considérée comme un état. Ainsi, les données descriptives et de configuration peuvent être considérées comme des états descriptifs mesurables et des états de configuration mesurables respectivement.

L'outil de compression 31 peut être basé sur une technique connue d'analyse parcimonieuse, d'analyse cartographique, d'analyse de classification non supervisée, d'analyse en composante principale, d'analyse de calcul itératif, ou autres types d'analyses. A titre d'exemple, un outil de compression selon une technique de cartographie autoadaptative est décrit dans la demande de brevet internationale WO2012110733 de la demanderesse.

On notera que les données d'observation 15a, 15b, 15n peuvent être initialement rapatriées et stockées dans la base de données 9 ou dans un réservoir de données spécifique avant qu'elles soient traitées par le processeur 7. Dans tous les cas, la base de données 9 comporte en définitive les états d'observation 19 traités par le processeur 7.

On notera également, qu'au départ, la base de données 9 est avantageusement initialisée avec des états préliminaires d'observation correspondant à des données initiales d'observation. Ces dernières proviennent du motoriste (en tant qu'entité) grâce notamment à des observations décrivant les dégradations constatées par les opérateurs de maintenance ainsi qu'aux connaissances des experts concernant par exemple des liens entre les symptômes et les opérations de maintenance.

Par ailleurs, avant la compression des données de détection 151a, le processeur 7 est avantageusement adapté pour effectuer au préalable un prétraitement des données de détection 151a afin de supprimer l'influence des conditions extérieures et des consignes sur les variables décrivant l'état des moteurs. En effet, le contexte d'acquisition de données peut être très variable. Par exemple, les mesures concernant le décollage acquises lors d'un premier vol de la journée où le moteur est démarré à froid peuvent être différentes de celles acquises lors des autres vols de la journée. D'autres exemples concernent la variation des conditions météo (pluie, neige, gel, etc.), le changement de pilotes, le lieu de survol de l'aéronef (i.e., au-dessus de la mer, du désert, de la terre, etc.). Tous ces effets peuvent bien entendu influencer les mesures.

Plus particulièrement, les données numériques de détection 151a comprennent des mesures sur des variables endogènes décrivant le comportement du moteur et des mesures sur des variables exogènes décrivant le contexte d'acquisition.

A titre d'exemple, les variables endogènes peuvent comprendre la vitesse de rotation de chaque arbre, le débit du carburant, les températures et pressions de fluides avant et/ou après compression, la température des gaz d'échappement, etc.

Les variables exogènes peuvent comprendre les variables suivantes : température extérieure, altitude, poids de l'avion, état du système de dégivrage des ailes, état du dispositif de dégivrage de l'entrée d'air du moteur, état de la vanne de purge, état de la vanne de décharge, position du stator à géométrie variable, régime moteur, état des vannes de prélèvement d'air, position de la manette de commande de poussée, vitesse de l'avion, etc.

Ainsi, pour chaque moteur, les mesures relatives aux variables endogènes sont standardisées en prenant en compte les mesures relatives aux variables exogènes pour former à chaque acquisition des données de détection standardisées du moteur. Les états de détection issus de ces données de détection standardisées sont représentés de manière indépendante du contexte d'acquisition, dans un espace mesurable dont la dimension est égale au nombre de variables endogènes. Une technique de standardisation est décrite dans la demande de brevet internationale WO2010076468 de la demanderesse.

Au final, la base de données 9 contient une pluralité d'états d'observation 29 comprenant des états de détection standardisés ainsi que des états de configuration et des états descriptifs. Cet ensemble d'états d'observation 29 constitue alors un modèle d'apprentissage précis et robuste de sorte que la base de données puisse ainsi être consultée pour réaliser des statistiques anticipatives ou conditionnelles.

En effet, le système de mutualisation 1 est configuré pour recevoir des requêtes à travers le réseau 19 de communication depuis chaque entité 17a, 17b, 17n et pour chercher des réponses à ces requêtes grâce aux états d'observation 29 stockés dans la base de données 9.

Plus particulièrement, le récepteur 11 est adapté pour recevoir une requête par l'intermédiaire d'un lien de communication sécurisé depuis toute entité requérante. La requête comporte des champs dans lesquels sont renseignées des données de requête relatives à des observations liées à au moins un moteur d'aéronef présentant un intérêt pour l'entité requérante. Le traitement de la requête consiste à rechercher par exemple des éléments dans la base de données 9 qui sont proches ou associés à des données ou éléments correspondants renseignés dans les champs de la requête. Un élément renseigné dans une requête peut être un symptôme, une opération de maintenance, un résultat après réparation, un évènement spécifique, etc. Les informations requêtées concernent par exemple les composants impliqués dans un symptôme, les dégradations potentielles et les coûts de réparation, le rang (ranking) de l'entité par rapport à un évènement spécifique, etc. Ces informations permettent à l'entité requérante de mieux gérer sa flotte de moteurs.

Avantageusement, les requêtes sont formatées à l'avance de sorte que chaque requête peut être définie selon un modèle sélectionné parmi un ensemble de modèles de requêtes prédéterminés ou préprogrammés.

Après réception d'une requête courante, le processeur 7 est adapté pour la décrire dans l'espace métrique en transformant les données de requête en des états de requête mesurables. Cette transformation peut être réalisée en utilisant un outil de compression 31 comme celui indiqué précédemment.

En outre, le processeur 7 est adapté pour chercher une réponse à la requête courante en utilisant un algorithme de recherche de similarité. A titre d'exemple, le processeur 7 met en œuvre une recherche de similarité en comparant selon une métrique correspondant à cette requête, les états de requête à des états d'observation correspondants stockés dans la base de données 9. La comparaison comporte le calcul d'une distance entre au moins un état de requête et les états d'observation correspondants. Cette distance peut être une distance usuelle (par exemple une distance euclidienne), une distance binaire, une distance d'édition (ou de Levenshtein) mesurant la similarité entre différentes successions d'états, ou d'autres types de distances.

Dans ce cas, la réponse à une requête courante comporte les éléments dans la base de données 9 qui présentent par rapport aux éléments de la requête une distance inférieure à un seuil prédéterminé.

Avantageusement, le processeur 7 est adapté pour utiliser un algorithme de classification non supervisé (clusterisation) pour découper en catégories semblables les résultats de chaque requête. Ce découpage permet au processeur 7 de présenter la réponse à la requête sous une forme de diagrammes statistiques anticipatifs ou généraux.

Par exemple, la réponse à la requête comporte une distribution d'un événement relative à l'entité requérante par rapport à la distribution des autres entités sans indiquer les identités des entités, exceptée celle de la requérante. Elle peut aussi comporter une liste d'observations passées similaires aux observations définies dans la requête en triant par exemple les éléments de la liste de la plus pertinente à la moins pertinente, etc.

Enfin, le transmetteur 13 est adapté pour transmettre la réponse par l'intermédiaire d'un lien 33 de communication sécurisé à l'entité requérante.

Avantageusement, les moyens de sortie 11 comportent un afficheur 35 adapté pour afficher la réponse transmise à l'entité requérante telle qu'elle sera affichée en définitive sur un écran d'un système informatique de l'entité requérante.

En outre, le processeur 7 est avantageusement adapté pour faire une mise à jour de la base de données 9 en y enregistrant les états des requêtes reçues au cours du temps ainsi que les résultats de ces requêtes. Les états et résultats des requêtes forment des nouvelles données d'observation permettant ainsi d'augmenter davantage la précision des réponses aux futures requêtes.

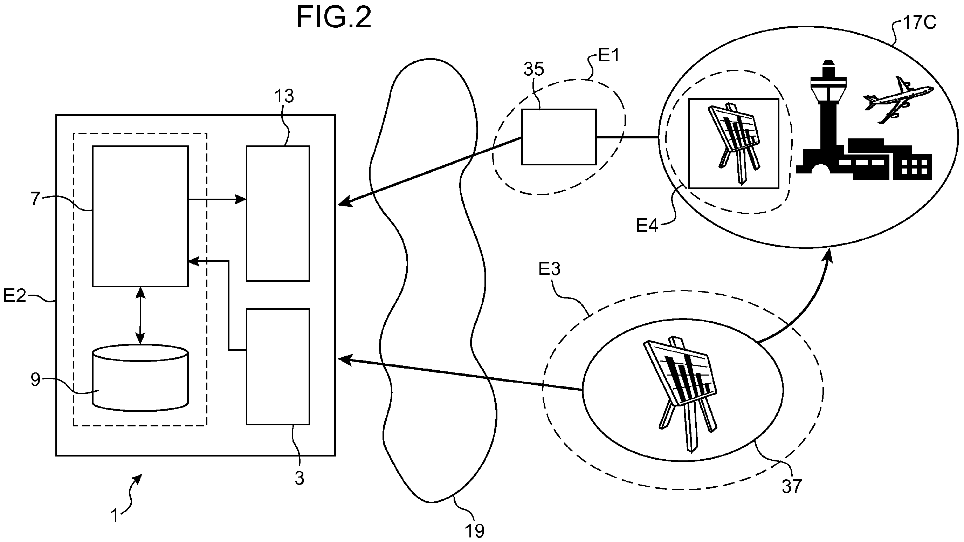

La Fig. 2 illustre de manière schématique un exemple d'un procédé de service d'appui mis en œuvre par le système de mutualisation selon l'invention.

Selon ce procédé une compagnie requérante 17c interroge le système de mutualisation 1 pour avoir des statistiques sur des symptômes ou opérations de maintenance effectuées sur un moteur.

Plus particulièrement, à l'étape E1 la compagnie 17c transmet une requête 35 concernant un symptôme particulier observé sur un de leur moteurs et demande de connaître l'évolution des moteurs qui ont eu un symptôme analogue dans le passé.

A l'étape E2, après la réception de la requête 35, le processeur 7 décrit cette requête dans l'espace métrique et utilise une distance appropriée pour chercher dans la base de données 9 l'évolution des moteurs qui ont eu un comportement analogue à celui renseigné dans la requête 35. Par exemple, une distance d'édition mesurant la similarité entre les différentes trajectoires formées par les états d'observation des moteurs peut être utilisée. En effet, chaque morceau de trajectoire d'un moteur correspond à une chaîne de caractères (labels de catégories) et ainsi, la distance d'édition est très adaptée pour mesurer la similarité entre deux chaînes de caractères. L'état futur du moteur visé par la requête 35 est alors extrapolé grâce aux trajectoires des autres moteurs ayant eu des comportements similaires. Le processeur 7 peut chercher également l'environnement favorisant ce type de symptômes ou d'événements et les causes probables ainsi que les coûts de réparation.

En outre, le processeur 7 utilise des techniques d'exploration de données (datamining) pour déterminer des statistiques sur la fréquence de ce genre d'événements selon par exemple les secteurs opérationnels des aéronefs (environnement sableux, pollué, marin, continental) ainsi que des statistiques, des classements et en particulier, le rang de la compagnie requérante 17c pour cet événement par rapport aux autres compagnies ou par rapport à l'ensemble de la flotte mondiale. Bien entendu, les identités des autres compagnies seront masquées. A titre d'exemple, la réponse peut comporter une représentation en nuage de points (scatter-plots) où les opérations de la compagnie requérante 17c sont d'une couleur différente de celles des autres compagnies.

A l'étape E3, une réponse 37 comportant tous les résultats trouvés à l'étape précédente est envoyée à l'entité requérante 17c. Tous ces résultats peuvent être représentés selon une multitude de diagrammes comportant des courbes, des barres, des nuages de points, etc.

A l'étape E4, la compagnie requérante 17c récupère la réponse 37 pour par exemple l'afficher sur un écran d'un système informatique. Grâce à cette réponse, la compagnie 17c peut mieux cerner les dégradations, les risques et les pannes potentielles du moteur concerné et par conséquent, peut mieux planifier les opérations ou la stratégie de maintenance. De plus, la compagnie requérante peut se situer parmi toutes les autres compagnies et peut ainsi évaluer sa gestion de sa flotte de moteurs.

Ainsi, en apportant ses propres informations, la compagnie bénéficie en retour de manière indirecte des informations de l'ensemble des compagnies. Le système de mutualisation assure alors à chaque compagnie un service d'appui (back office) précis et performant lui procurant une aide précieuse pour gérer sa flotte de moteurs d'aéronefs.

Par ailleurs, on notera que l'accès à l'information peut être réglementé selon le type de l'entité requérante ou le lien entre l'entité et le motoriste. Certaines entités peuvent accéder uniquement à des informations générales tandis que d'autres peuvent disposer d'informations beaucoup plus détaillées.

Le système de mutualisation selon l'invention fournit ainsi une interface intelligente pour l'exploitation des données d'observation hétérogènes, issues des différentes sources et qui au départ n'étaient pas exploitables. Ce système est adapté pour rendre toutes ces données comparables et permet par conséquent, de réaliser des statistiques, des classements ainsi que des pronostics.

## Revendications

1. Système de mutualisation et d'exploitation de données d'observation relatives à des moteurs d'aéronefs, **caractérisé en ce qu'**il comporte :
- un récepteur (3) adapté pour récupérer lesdites données d'observation (15a, 15b, 15n) depuis des entités (17a, 17b, 17n) distinctes, chaque entité fournissant par l'intermédiaire d'un lien de communication sécurisé les données d'observation relatives à sa propre flotte de moteurs d'aéronef, lesdites données d'observation (15a) comportant des données de configuration de moteurs d'aéronefs, des données descriptives décrivant des interventions ou opérations de maintenance sur des moteurs d'aéronef, et des données numériques de détection (151a) issues de capteurs et calculateurs embarqués dans les moteurs d'aéronefs, lesdites données numériques de détection (151a) comprenant des mesures sur des variables endogènes décrivant le comportement des moteurs et des mesures sur des variables exogènes décrivant le contexte d'acquisition,
- un processeur (7) adapté pour décrire lesdites données d'observation dans un espace métrique, les données de détection étant transformées en des états de détection en les standardisant et en les comprimant, les données de configuration et les données descriptives étant comprimés selon un codage catégoriel relatif aux types de moteurs, de composants, d'opérations effectuées et symptômes formant ainsi des états de configuration et des états descriptifs, transformant ainsi lesdites données d'observation en des états d'observation (29) mesurables, les mesures relatives aux variables endogènes étant standardisées en prenant en compte les mesures relatives aux variables exogènes pour former à chaque acquisition des données de détection standardisées du moteur indépendantes du contexte d'acquisition, la compression de données numériques de détection étant réalisée par un outil de compression (31) adapté pour réduire le nombre de dimensions d'un espace d'observation dans lequel les données d'observation sont décrites le transformant en ledit espace métrique définissant des mesures exploitables, et
- une base de données (9) adaptée pour y stocker lesdits états d'observation (29) mesurables comprenant des états de détection standardisés ainsi que des états de configuration et des états descriptifs, constituant ainsi un modèle d'apprentissage,
- le récepteur (3) étant adapté pour recevoir une requête (35) depuis une entité (17c) requérante, ladite requête comportant des données de requête relatives à des observations liées à au moins un moteur d'aéronef présentant un intérêt pour l'entité requérante,
- le processeur (7) étant adapté :
pour décrire ladite requête dans ledit espace métrique en transformant lesdites données de requête en des états de requête mesurables, et
pour chercher une réponse à ladite requête en comparant selon une métrique correspondant à la requête lesdits états de requête à des états d'observation stockés dans la base de données, la comparaison comportant le calcul d'une distance entre au moins un état de requête et des états d'observation stockés dans la base de données, la réponse à la requête comportant des éléments dans la base de données (9) qui présentent par rapport aux éléments de la requête une distance inférieure à un seuil prédéterminé,
- un transmetteur (13) adapté pour transmettre ladite réponse (37) par l'intermédiaire d'un lien de communication sécurisé à l'entité requérante.

2. Système selon la revendication 1, **caractérisé en ce que** l'entité (17a, 17b, 17n) correspond à une compagnie aérienne, chaque compagnie fournissant des données d'observation relatives à sa propre flotte de moteurs d'aéronef.

3. Système selon la revendication 1, **caractérisé en ce que** l'entité correspond à une unité de construction, de maintenance, ou de service d'un motoriste d'aéronef.

4. Système selon l'une quelconque des revendications précédentes, **caractérisé en ce que** la requête est définie selon un modèle sélectionné parmi un ensemble de modèles de requêtes prédéterminés à l'avance.

5. Système selon l'une quelconque des revendications précédentes, **caractérisé en ce que** l'outil de compression (31) est basé sur au moins une des techniques suivantes : analyse parcimonieuse, analyse cartographique, analyse de classification non supervisée, analyse en composante principale, et analyse de calcul itératif.

6. Système selon l'une quelconque des revendications précédentes, **caractérisé en ce que** la distance entre au moins un état de requête et des états d'observation stockés dans la base de données est sélectionnée parmi les distances suivantes : distance usuelle, distance binaire, distance d'édition mesurant la similarité entre différentes successions d'états.

7. Système selon l'une quelconque des revendications précédentes, **caractérisé en ce que** le processeur (7) est adapté pour utiliser un algorithme de classification pour découper en catégories semblables les résultats de chaque requête et pour présenter la réponse à la requête sous une forme de diagrammes statistiques anticipatifs ou généraux.

8. Système selon l'une quelconque des revendications précédentes, **caractérisé en ce que** la réponse à la requête comporte une liste d'observations passées similaires aux observations définies dans la requête.

9. Système selon l'une quelconque des revendications précédentes, **caractérisé en ce que** chacun des récepteur (3) et transmetteur (11) est sécurisé.

10. Système selon l'une quelconque des revendications précédentes, **caractérisé en ce que** le processeur (7) est adapté pour faire une mise à jour de la base de données (9) en y enregistrant les états des requêtes reçues ainsi que des résultats de ces requêtes.

## Patentansprüche

1. System zur Bündelung und Nutzung von Beobachtungsdaten bezüglich Luftfahrzeugmotoren, **dadurch gekennzeichnet, dass** es Folgendes umfasst:
- einen Empfänger (3), der zur Gewinnung der Beobachtungsdaten (15a, 15b, 15n) von getrennten Einheiten (17a, 17b, 17n) ausgelegt ist, wobei jede Einheit über eine gesicherte Kommunikationsverbindung die Beobachtungsdaten bezüglich ihrer eigenen Flotte von Luftfahrzeugmotoren liefert, wobei die Beobachtungsdaten (15a) Konfigurationsdaten von Luftfahrzeugmotoren, beschreibende Daten, die Wartungseingriffe oder -vorgänge an den Luftfahrzeugmotoren beschreiben, sowie numerische Erfassungsdaten (151a) enthalten, welche von bordeigenen Sensoren und Rechnern in den Luftfahrzeugmotoren ausgegeben werden, wobei die numerischen Erfassungsdaten (151a) Messungen an endogenen Variablen, die das Verhalten der Motoren beschreiben, sowie Messungen von exogenen Variablen umfassen, die den Erwerbskontext beschreiben,
- einen Prozessor (7), der zum Beschreiben der Beobachtungsdaten in einem metrischen Raum ausgelegt ist, wobei die Erfassungsdaten in Erfassungszustände umgewandelt werden, in dem sie vereinheitlicht und komprimiert werden, wobei die Konfigurationsdaten und die beschreibenden Daten gemäß einer kategoriellen Codierung bezüglich der Arten von Motoren, von Bestandteilen, von ausgeführten Vorgängen und Symptomen komprimiert werden, welche somit Konfigurationszustände und beschreibende Zustände bilden und somit die Beobachtungsdaten in messbare Beobachtungszustände (29) umwandeln, wobei die Messungen bezüglich der endogenen Variablen vereinheitlicht werden, indem sie die Messungen bezüglich der exogenen Variablen berücksichtigen, um bei jedem Erwerb vereinheitlichte Erfassungsdaten des Motors zu bilden, die unabhängig von dem Erwerbskontext sind, wobei die Komprimierung von numerischen Erfassungsdaten durch ein Komprimierungsinstrument (31) realisiert wird, das dazu ausgelegt ist, die Anzahl von Dimensionen eines Beobachtungsraumes zu reduzieren, in welchem die Beobachtungsdaten beschrieben werden, wobei dieser in den metrischen Raum umgewandelt wird, welcher nutzbare Messungen definiert, und
- eine Datenbank (9), die dazu ausgelegt ist, darin die messbaren Beobachtungszustände (29) zu speichern, die vereinheitlichte Erfassungszustände sowie Konfigurationszustände und beschreibende Zustände umfassen, wobei diese somit ein Lernmodell darstellt,
- wobei der Empfänger (3) dazu ausgelegt ist, eine Anfrage (35) von einer anfragenden Einheit (17c) zu empfangen, wobei die Anfrage Anfragedaten bezüglich Beobachtungen aufweist, welche mit mindestens einem Luftfahrzeugmotor verbunden sind, der für die anfragende Einheit von Interesse ist,
- wobei der Prozessor (7) dazu ausgelegt ist:
die Anfrage in dem metrischen Raum zu beschreiben, indem er die Anfragedaten in messbare Anfragezustände umwandelt, und
eine Antwort auf die Anfrage zu suchen, indem er gemäß einer der Anfrage entsprechenden Metrik die Anfragezustände mit in der Datenbank gespeicherten Beobachtungszuständen vergleicht, wobei der Vergleich die Berechnung eines Abstands zwischen zumindest einem Anfragezustand und in der Datenbank gespeicherten Beobachtungszuständen aufweist, wobei die Antwort auf die Anfrage Elemente in der Datenbank (9) aufweist, die bezüglich der Elemente der Anfrage einen Abstand aufweisen, der geringer als ein vorgegebener Schwellenwert ist,
- einen Sender (13), der dazu ausgelegt ist, die Antwort (37) über eine an der anfragenden Einheit gesicherte Kommunikationsverbindung zu senden.

2. System nach Anspruch 1, **dadurch gekennzeichnet, dass** die Einheit (17a, 17b, 17n) einem Luftfahrtunternehmen entspricht, wobei jedes Unternehmen Beobachtungsdaten bezüglich seiner eigenen Flotte von Luftfahrzeugmotoren liefert.

3. System nach Anspruch 1, **dadurch gekennzeichnet, dass** die Einheit einer Konstruktions-, Wartungs- oder Serviceeinheit eines Luftfahrzeugmotorenherstellers entspricht.

4. System nach einem der vorhergehenden Ansprüche, **dadurch gekennzeichnet, dass** die Anfrage nach einem Modell definiert ist, das aus den gesamten Modellen von vorab vorgegebenen Anfragen ausgewählt ist.

5. System nach einem der vorhergehenden Ansprüche, **dadurch gekennzeichnet, dass** das Komprimierungsinstrument (31) auf mindestens einer der nachfolgenden Techniken basiert: Sparsamkeitsanalyse, kartographische Analyse, nicht überwachte Klassifizierungsanalyse, Hauptkomponentenanalyse sowie iterative Berechnungsanalyse.

6. System nach einem der vorhergehenden Ansprüche, **dadurch gekennzeichnet, dass** der Abstand zwischen mindestens einem Anfragezustand und in der Datenbank gespeicherten Beobachtungszuständen aus den nachfolgenden Abständen ausgewählt ist: üblicher Abstand, binärer Abstand, Ausgabeabstand, der die Ähnlichkeit zwischen verschiedenen Abfolgen von Zuständen misst.

7. System nach einem der vorhergehenden Ansprüche, **dadurch gekennzeichnet, dass** der Prozessor (7) dazu ausgelegt ist, einen Klassifizierungsalgorithmus einzusetzen, um die Ergebnisse jeder Anfrage in ähnliche Kategorien zu zerlegen, und die Antwort auf die Anfrage in Form von antizipierenden oder allgemeinen statistischen Diagrammen darzustellen.

8. System nach einem der vorhergehenden Ansprüche, **dadurch gekennzeichnet, dass** die Antwort auf die Anfrage eine Liste von bisherigen Beobachtungen enthält, die mit den in der Anfrage definierten Beobachtungen vergleichbar sind.

9. System nach einem der vorhergehenden Ansprüche, **dadurch gekennzeichnet, dass** die Empfänger (3) und Sender (11) jeweils gesichert sind.

10. System nach einem der vorhergehenden Ansprüche, **dadurch gekennzeichnet, dass** der Prozessor (7) dazu ausgelegt ist, eine Aktualisierung der Datenbank (9) durchzuführen, indem er in dieser die Zustände der empfangenen Anfragen sowie Ergebnisse dieser Anfragen speichert.

## Claims

1. A system for mutualising and operating observation data relating to aircraft engines, **characterised in that** it includes:
- a receiver (3) adapted to recover said observation data (15a, 15b, 15n) from distinct entities (17a, 17b, 17n), each entity providing, through a secure communication link, observation data relating to its own fleet of aircraft engines, said observation data (15a) including configuration data for aircraft engines, descriptive data describing maintenance interventions or operations on aircraft engines, and digital detection data (151a) coming from sensors and calculators on-board the aircraft engines, said digital detection data (151a) comprising measurements on endogenous variables describing the behaviour of engines and measurements on exogenous variables describing the acquisition context,
- a processor (7) adapted to describe said observation data in a metric space, the detection data being transformed into detection states by being standardised and compressed, the configuration data and descriptive data being compressed according to a category-specific coding relating to types of engines, components, operations performed and symptoms thus forming configuration states and descriptive states, thus transforming said observation data into measurable observation states (29), the measurements relating to endogenous variables being standardised by taking account of measurements relating to exogenous variables to form, at each acquisition, standardised detection data of the engine which are independent of the acquisition context, compressing digital detection data being performed by a compressing tool (31) adapted to reduce the number of dimensions of an observation space in which observation data are described, transforming it into said metric space defining operable measurements, and
- a database (9) adapted to store said measurable observation states (29) therein, comprising standardised detection states as well as configuration states and descriptive states, thus constituting a learning model,
- the receiver (3) being adapted to receive a request (35) from a requesting entity (17c), said request including request data relating to observations relating to at least one aircraft engine being of interest for the requesting entity,
- the processor (7) being adapted:
to describe said request in said metric space by transforming said request data into measurable request states, and
to search a response to said request, by comparing, according to a metric corresponding to the request, said request states to observation states stored into the database, comparing including calculating a distance between at least one request state and observation states stored into the database, the response to the request including elements into the database (9) which have, relative to elements of the request, a distance lower than a predetermined threshold,
- a transmitter (13) adapted to transmit said response (37) through a secure communication link to the requesting entity.

2. The system according to claim 1, **characterised in that** the entity (17a, 17b, 17n) corresponds to an airline, each airline providing observation data relating to its own fleet of aircraft engines.

3. The system according to claim 1, **characterised in that** the entity corresponds to a construction, maintenance, or service unit of an aircraft engine-maker.

4. The system according to any of the previous claims, **characterised in that** the request is defined according to a model selected from a set of request models predetermined beforehand.

5. The system according to any of the previous claims, **characterised in that** the compressing tool (31) is based on at least one of the following techniques: parsimonious analysis, cartographic analysis, non-supervised classification analysis, principal component analysis, and iterative calculation analysis.

6. The system according to any of the previous claims, **characterised in that** the distance between at least one request state and the observation states stored into the database is selected from the following distances: usual distance, binary distance, edit distance measuring similarity between different successions of states.

7. The system according to any of the previous claims, **characterised in that** the processor (7) is adapted to use a classification algorithm to classify the results of each request into similar categories and to present the response to the request as anticipatory or general statistical charts.

8. The system according to any of the previous claims, **characterised in that** the response to the request includes a list of past observations similar to the observations defined in the request.

9. The system according to any of the previous claims, **characterised in that** each of the receiver (3) and transmitter (11) is secured.

10. The system according to any of the previous claims, **characterised in that** the processor (7) is adapted to update the database (9) by recording therein states of the received requests as well as results of these requests.
